# EUROPEAN PATENT APPLICATION

(11) **EP 1 909 498 A1**
(43) Date of publication of application: **09.04.2008**
(21) Application number: 06767247.7
(22) Date of filing: 23.06.2006
(51) Int. Cl.: H04N 7/173, H04N 5/44, H04N 5/445

(54) **ELECTRONIC PROGRAM GUIDE DISPLAY DEVICE FOR DISPLAYING ELECTRONIC PROGRAM GUIDE**

(30) Priority: 28.06.2005 JP 2005188633; 27.02.2006 JP 2006050806
(71) Applicant: Sharp Kabushiki Kaisha, Osaka-shi, Osaka 545-8522 (JP)
(72) Inventor: MATSUYAMA, Tetsuya, Hairain Gyotoku 302, 1-17-1, Chiba 272-0133 (JP); HAGAWA, Toshihide, Raporu Kamatori 246, 2876-11, Chiba 266-0011 (JP); UEDA, Toru, Kyoto 619-0215 (JP)
(74) Representative: Müller - Hoffmann & Partner
(86) International application number: PCT/JP2006/312598
(87) International publication number: WO 2007/000944

(57) **Abstract**

In a terminal device, a template containing scripts defining terminal operation used for bi-directional service is obtained and analyzed/stored in advance. The terminal device obtains an electronic program guide, and if a program allowing use of a stored template exists, displays, on the electronic program guide, information indicating presence of the template, information indicating template function and charge information associated with the use of the template.

## Description

### TECHNICAL FIELD

The present invention relates to an electronic program guide display device and, more specifically, to an electronic program guide display device displaying the electronic program guide in a user-friendly manner.

### BACKGROUND ART

Currently, terrestrial digital broadcast and satellite digital broadcast provide sub-contents including latest news, weather forecast and information related to a program that is being broadcast, utilizing data broadcast, and by a language referred to as BML (Broadcast Markup Language), characters, images and layout of information displayed on a screen are defined. A viewer can not only view a program but also send out a signal to the broadcast program or broadcast station, to participate in a quiz show or to buy a product introduced in a shopping program. Information related to such programs is also provided by an EPG (Electronic Program Guide) and it is possible for a viewer to obtain information of casts and episodes of a program by designating the program on the EPG.

The sub-contents related to programs such as the electronic program guide are included in data broadcast and, in addition, provided on the Internet through communication lines. By way of example, Japanese Patent Laying-Open No. 2005-26867 (hereinafter referred to as Patent Document 1) proposes a receiving terminal aimed at merging broadcast and communication, to allow the user to enjoy wider variety of services. The receiving terminal such as proposed in Patent Document 1 receives link destination information such as a URL (Uniform Resource Locator) on the Internet as the sub-content included in the data broadcast, and displays a specific mark such as an icon, indicating presence of the sub-contents at the link-destination, on a display column of the corresponding program of the EPG. By selecting the icon, the user can obtain the sub-content existing on the Internet.

The applicant of the present application proposed a multi-media data processing device capable of forming multi-media content in a simple manner utilizing various functions such as camera, microphone and address-book held in an individual terminal such as a portable telephone or a portable terminal, which is disclosed in Japanese Patent Laying-Open No. 2004-343683 (hereinafter referred to as Patent Document 2). In the multi-media data processing device proposed in Patent Document 2, various functions are called in order time-sequentially by a script described in a template, and therefore, simply by an operation through a user interface at prescribed timings, the user can form multi-media content easily.

Along with widespread use of portable telephones equipped with a tuner allowing reception of TV programs, viewers are expected to have easier access to various digital broadcast through portable telephones. In keeping with this trend, it becomes necessary to consider services provided by data broadcast, assuming viewing not only on TV receivers at home but also on portable telephones. For instance, by providing the above-described template on data broadcast in place of BML, it becomes possible for the user to obtain data necessary to enjoy the service simply through functions provided on a portable telephone such as camera, microphone and address-book.
Patent Document 1: Japanese Patent Laying-Open No. 2005-26867
Patent Document 2: Japanese Patent Laying-Open No. 2004-343683

### DISCLOSURE OF THE INVENTION

### PROBLEMS TO BE SOLVED BY THE INVENTION

Specifically, the template transmitted to a terminal through data broadcast is stored in the terminal to allow subsequent use by the user. If the number of stored templates increases, however, it would be difficult for the user to select a desired template. In the first place, one cannot know what templates allowing what services are stored in the terminal.

Generally, information and services provided by data broadcast are related to a broadcast program. Therefore, it is often the case that the user memorizes the information or service in association with the program. Display of each piece of information using an icon on the display column of the corresponding program of EPG as proposed in Patent Document 1 would be helpful when the user searches for information using the program title as a key. The icon, however, only indicates presence/absence of information and, what information is actually provided cannot be known unless the information at the link-destination is obtained. Therefore, when the number of icons increases, it becomes difficult to find a desired piece of information.

The present invention was made in view of the foregoing, and its object is to provide an electronic program guide display device receiving electronic program guide data provided by broadcast and sub-contents related to a program provided by broadcasts or communication and displaying the electronic program guide, which gives display reflecting analysis of the sub-contents.

### MEANS FOR SOLVING THE PROBLEMS

In order to attain the above-described object, according to an aspect, the present invention provides an electronic program guide display device, including: an electronic program guide obtaining unit obtaining an electronic program guide for displaying information related to a program; a sub-content obtaining unit obtaining a sub-content including a piece of information specifying a program and a piece of information defining a terminal operation; an electronic program guide display unit displaying the electronic program guide; a sub-content selecting unit selecting a sub-content related to a program presented by the electronic program guide, from the sub-contents obtained by the sub-content obtaining unit; and a sub-content presence display unit indicating, when a sub-content related to the program presented on the electronic program guide exists among sub-contents obtained by the sub-content obtaining unit, presence of the sub-content with the piece of information related to the program.

Preferably, the electronic program guide display device further includes a sub-content analyzing unit analyzing the content of sub-content obtained by the sub-content obtaining unit; and a display selecting unit selecting a display for indicating presence of the sub-content at the sub-content presence display unit, in accordance with operation content of the terminal obtained by the sub-content analyzing unit.

Preferably, the electronic program guide display device further includes a sub-content reproducing unit reproducing the sub-content; a message forming unit forming a message from information included in the sub-content and a user input; and a transmitting unit transmitting the message formed by the message forming unit.

Preferably, the sub-content analyzing unit specifies a function used by the message forming unit. Preferably, the sub-content analyzing unit specifies whether use of the sub-contents is charged or not. Preferably, the sub-content analyzing unit specifies charge of use of the sub-content. Preferably, the sub-content analyzing unit specifies a time period in which use of the sub-content is possible. Specifically, the time period in which use of the sub-content is possible is during broadcast of the program to which the sub-content is related.

Preferably, the electronic program guide obtaining unit and the sub-content obtaining unit obtain the electronic program guide and the sub-content through one same communication unit. Alternatively, it is preferred that the electronic program guide obtaining unit and the sub-content obtaining unit obtain the electronic program guide and the sub-content through communication units different from each other.

Preferably, the sub-content obtaining unit includes a first obtaining unit and a second obtaining unit, and the display selecting unit further selects a first display when the sub-content is obtained by the first obtaining unit, and selects a second display when it is obtained by the second obtaining unit.

Preferably, the electronic program guide display device further includes a plurality of sub-content reproducing units reproducing sub-contents; and a sub-content reproducing unit selecting unit selecting a sub-content reproducing unit for reproducing the sub-content from the plurality of sub-content reproducing units.

Further, preferably, the sub-content analyzing unit analyzes content of the sub-content and specifies the first sub-content reproducing unit and the second sub-content reproducing unit as the sub-content reproducing unit for reproducing the sub-content; and the sub-content reproducing unit selecting unit selects the sub-content reproducing unit for reproducing the sub-content from the first sub-content reproducing unit and the second sub-content reproducing unit.

More preferably, the display selecting unit selects the display in accordance with the sub-content reproduction for reproducing the sub-content specified by the sub-content analyzing unit.

Preferably, the program guide display device further includes a terminal information obtaining unit obtaining terminal information as information about a function of the program guide display device, and the display selecting unit selects the display in accordance with operation content of the terminal obtained by the sub-content analyzing unit and the terminal information obtained by the terminal information obtaining unit.

### EFFECTS OF THE INVENTION

The electronic program guide display device in accordance with an aspect of the present invention makes it possible to indicate, in the electronic program guide, presence of sub-content related to a program. As a result, even when the number of sub-contents to be stored increases, it would be easier for the user to search for a desired sub-content. Further, by simply looking at the electronic program guide, the user can recognize presence of sub-content related to a program.

Further, the electronic program guide display device in accordance with an aspect of the present invention makes it possible to suggest to the user viewing the electronic program guide what each sub-content is like, when the presence of sub-content related to a program is indicated in the electronic program guide.

Further, the electronic program guide display device in accordance with an aspect of the present invention forms a message utilizing sub-content displayed on the electronic program guide and transmits the message to a prescribed server through the Internet, whereby it becomes possible for the user to easily enjoy the program-related service.

Further, the electronic program guide display device in accordance with an aspect of the present invention makes it possible to suggest to the user what function is utilized by each sub-content, when the presence of sub-content related to a program is indicated in the electronic program guide.

Further, the electronic program guide display device in accordance with an aspect of the present invention makes it possible to suggest to the user whether the service used based on the sub-content is a pay-service or not, when the presence of sub-content related to a program is indicated in the electronic program guide. This prevents the user from erroneously use pay-service from the sub-content.

Further, the electronic program guide display device in accordance with an aspect of the present invention makes it possible to suggest charge for each sub-content when the presence of sub-content related to a program is indicated in the electronic program guide.

Further, the electronic program guide display device in accordance with an aspect of the present invention makes it possible to suggest a time period in which each sub-content is available, when the presence of sub-content related to a program is indicated in the electronic program guide. This promotes use of the service by the user in a specific time zone.

Further, the electronic program guide display device in accordance with an aspect of the present invention makes it possible to suggest that each sub-content is available only during broadcast of the program, when the presence of sub-content related to a program is indicated in the electronic program guide. This motivates the user to view the program.

Further, the electronic program guide display device in accordance with an aspect of the present invention allows retrieval of sub-content related to a program and the electronic program guide through one same communication unit.

Further, the electronic program guide display device in accordance with an aspect of the present invention allows retrieval of sub-content related to a program and the electronic program guide through different communication units. This means that sub-content received by a mail, for example, can be displayed on the electronic program guide.

Further, the electronic program guide display device in accordance with an aspect of the present invention makes it possible to suggest to the user viewing the electronic program guide how each sub-content has been obtained, when the presence of sub-content related to a program is indicated in the electronic program guide.

Further, the electronic program guide display device in accordance with an aspect of the present invention allows selection of a sub-content reproducing unit from a plurality of sub-content reproducing units.

Further, the electronic program guide display device in accordance with an aspect of the present invention allows selection of a sub-content reproducing unit from a plurality of sub-content reproducing units specified by the sub-content analyzing unit.

Further, the electronic program guide display device in accordance with an aspect of the present invention allows selection of a display indicating presence of the sub-content, in accordance with the plurality of sub-content reproducing units specified by the sub-content analyzing unit. Accordingly, it is possible to suggest to the user which reproducing unit can be used to reproduce which sub-content, and the user can reproduce each sub-content using a desired reproducing unit.

Further, the electronic program guide display device in accordance with an aspect of the present invention allows selection of display indicating presence of sub-content, dependent on the state of a terminal.

### BRIEF DESCRIPTION OF THE DRAWINGS

Fig. 1 is a block diagram representing a specific example of a functional configuration of an electronic program guide display device 114, and a configuration of an electronic program guide display system including the electronic program guide display device 114.
Fig. 2 is a flowchart representing a specific example of a process in electronic program guide display device 114.
Fig. 3 shows a specific example of an electronic program guide displayed at step S204.
Fig. 4 shows a specific example of script description in accordance with a first embodiment.
Fig. 5 shows an image displayed when a template reproducing unit 111 reproduces a template.
Fig. 6 shows a specific example of icon information stored in an icon information storage unit 117.
Fig. 7 shows a specific example of an electronic program guide displayed at step S206 in the first embodiment.
Fig. 8 shows a specific example of script description in accordance with a second embodiment.
Fig. 9 illustrates images displayed when template reproducing unit 111 reproduces the template including the script shown in Fig. 8.
Fig. 10 shows a specific example of an electronic program guide displayed at step S206 in the second embodiment.
Fig. 11 shows a specific example of script description in accordance with a third embodiment.
Fig. 12 illustrates images displayed when template reproducing unit 111 reproduces the template including the script shown in Fig. 11.
Fig. 13 shows a specific example of an electronic program guide displayed at step S206 in the third embodiment.
Fig. 14 shows a specific example of script description included in a template for contributing ¥ 100 to a welfare organization introduced in a news program.
Fig. 15 shows a specific example of display of an electronic program guide when the template including the script shown in Fig. 14 is processed.
Fig. 16 is a block diagram representing a specific example of a functional configuration of an electronic program guide display device 114, and a configuration of an electronic program guide display system including the electronic program guide display device 114 in accordance with a fourth embodiment.
Fig. 17 is a flowchart representing a specific example of a process in electronic program guide display device 114 in accordance with the fourth embodiment.
Fig. 18 shows a specific example of a selection image.
Fig. 19 is a block diagram representing a specific example of a functional configuration of the electronic program guide display device 114 in accordance with a fifth embodiment.
Fig. 20 shows another specific example of icon information stored in the icon information storage unit 117.
Fig. 21 shows a specific example of an electronic program guide displayed at step S206 in the fourth embodiment.
Fig. 22 shows a specific example of script description in accordance with a sixth embodiment.
Fig. 23 shows a specific example of description of electronic program guide data.
Fig. 24 is a block diagram representing a specific example of a functional configuration of the electronic program guide display device 114 in accordance with a seventh embodiment.
Fig. 25 is a flowchart representing a specific example of a process in electronic program guide display device 114 in accordance with the seventh embodiment.
Fig. 26 shows a specific example of script description in accordance with the seventh embodiment.
Fig. 27 shows a specific example of icon information stored in the icon information storage unit 117.
Fig. 28 shows a specific example of electronic program guide.
Fig. 29 shows a specific example of electronic program guide.
Fig. 30 is a block diagram representing a specific example of a functional configuration of the electronic program guide display device 114 in accordance with a ninth embodiment.
Fig. 31 is a flowchart representing a specific example of a process in electronic program guide display device 114 in accordance with the ninth embodiment.
Fig. 32 shows another specific example of icon information stored in the icon information storage unit 117.
Fig. 33 shows a specific example of a dialog for selecting an application to be activated.

### DESCRIPTION OF THE REFERENCE SIGNS

101 broadcast receiving unit, 102 AV data reproducing unit, 103 electronic program guide obtaining unit, 104 template obtaining unit, 105 electronic program guide browsing unit, 106 template analyzing unit, 107 display selecting unit, 108 template presence display unit, 109 electronic program guide display unit, 110 template selecting unit, 111 template reproducing unit, 112 message forming unit, 113 communication unit, 114 electronic program guide display device, 115 broadcast station, 116 server, 117 icon information storage unit, 118 template providing server, 119 broadcast template obtaining unit, 120 communication template obtaining unit, 121 application selecting unit, 122 Web browser unit, 123 terminal information obtaining unit.

### BEST MODES FOR CARRYING OUT THE INVENTION

In the following, embodiments of the present invention will be described with reference to the figures.

The electronic program guide display device in accordance with the present invention is a terminal device allowing two different types of communications with a broadcast station and a server and, suitably, it is a portable telephone having a TV broadcast receiving function and an Internet communication function.

Here, the electronic program guide presents, to the viewer, pieces of information related to programs such as program titles and broadcast time, in the form of a table on a screen.

In the following description, a template will be used as an example of the sub-content related to a program.

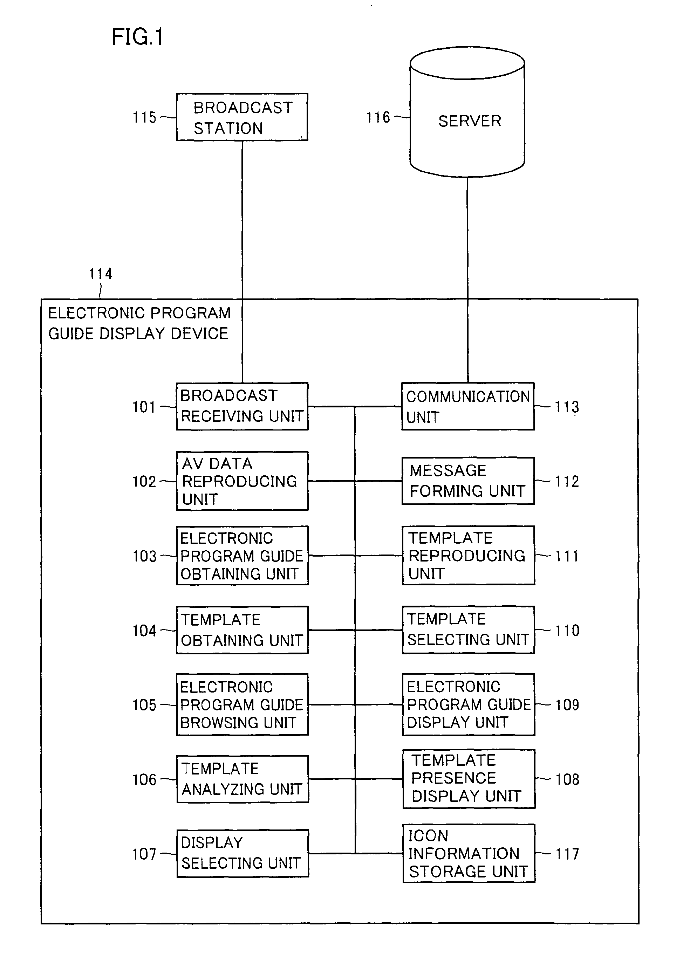

Referring to Fig. 1, an electronic program guide display device 114 is formed including a broadcast receiving unit 101, an AV (Audio Video) data reproducing unit 102, an electronic program guide obtaining unit 103, a template obtaining unit 104, an electronic program guide browsing unit 105, a template analyzing unit 106, a display selecting unit 107, a template presence display unit 108, an electronic program guide display unit 109, a template selecting unit 110, a template reproducing unit 111, a message forming unit 112, a communication unit 113, and an icon information storage unit 117.

Broadcast receiving unit 101 exchanges first communication with broadcast station 115, receives television broadcast information provided by data broadcast from broadcast station 115, and inputs the received television broadcast information to AV data reproducing unit 102, electronic program guide obtaining unit 103 and template obtaining unit 104. AV data reproducing unit 102 reproduces AV data included in the input television broadcast information.

Electronic program guide obtaining unit 103 obtains electronic program guide data from the input television broadcast information, and stores the data in a prescribed storage area, not shown, such as a prescribed storage area in a storage. Further, template obtaining unit 104 obtains a template from the input television broadcast information, and stores the template in a prescribed storage area, not shown, such as a prescribed storage area in a storage. Specifically, electronic program guide obtaining unit 103 and template obtaining unit 104 obtain the electronic program guide and the template, respectively, through broadcast receiving unit 101 as one same communication means.

Electronic program guide browsing unit 105 represents a function that corresponds to input means such as a prescribed key. It receives an instruction using the input means in connection with browsing of the electronic program guide obtained by electronic program guide obtaining unit 103, and inputs an instruction signal to electronic program guide display unit 109 and template analyzing unit 106.

Template analyzing unit 106 analyzes the stored template in accordance with the instruction signal described above, specifies the program to which the template is related, the template display name and the operation content of the template, and inputs the result of analysis to display selecting unit 107, template selecting unit 110 and template presence display unit 108. Further, electronic program guide display unit 109 displays the stored electronic program guide in accordance with the instruction signal described above.

Template selecting unit 110 selects a related template for each of the programs displayed by electronic program guide display unit 109 based on the result of analysis input from template analyzing unit 106. Further, display selecting unit 107 obtains prescribed piece of icon information from icon information stored in icon information storage unit 117, based on the result of analysis input from template analyzing unit 106, and inputs the piece of information to template presence display unit 108. Template presence display unit 108 displays the template display name input from template analyzing unit 106 and the piece of icon information input from display selecting unit 107, in association with each program in the electronic program guide. Template selecting unit 110 receives selection of the displayed icon or display name from the user, and inputs an instruction signal specifying the selected template to template reproducing unit 111.

In accordance with the instruction signal mentioned above, template reproducing unit 11 reproduces the selected template. At the time of reproduction, template reproducing unit 111 inputs information included in the template to message forming unit 112.

Message forming unit 112 forms a message from the information included in the template and input from template reproducing unit 111 and from the user input, and inputs the message to communication unit 113. Communication unit 113 transmits the input message to server 116 designated by the user or by the template through the Internet.

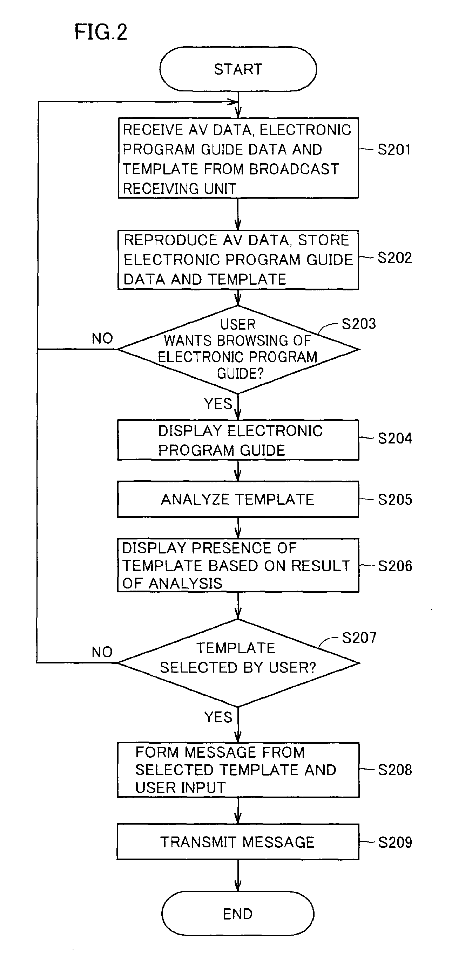

The process shown in the flowchart of Fig. 2 is realized by a CPU (Central Processing Unit), not shown, of electronic program guide display device 114 typically implemented by a portable telephone or the like, not shown, reading and executing a program stored in a storage to invoke various functions shown in Fig. 1.

Referring to Fig. 2, first, the AV data, electronic program guide data and the template transmitted from broadcast station 115 are received by broadcast receiving unit 101 (step S201). By way of example, AV data is received as a program content to be viewed by the viewer as a TV program of digital broadcast, and the electronic program information data and the template are received as data broadcast of digital broadcast.

Next, the AV data received by broadcast receiving unit 101 at step S201 is reproduced by AV data reproducing unit 102, while electronic program guide data and the template are obtained by electronic program guide data obtaining unit 103 and template obtaining unit 104, respectively and stored at prescribed storage areas (step S202).

When browsing of the electronic program guide instructed by the user by pressing a prescribed key or the like is received by electronic program guide browsing unit 105 (YES at step S203), the process proceeds to step S204. Otherwise (NO at step S203), the process returns to step S201.

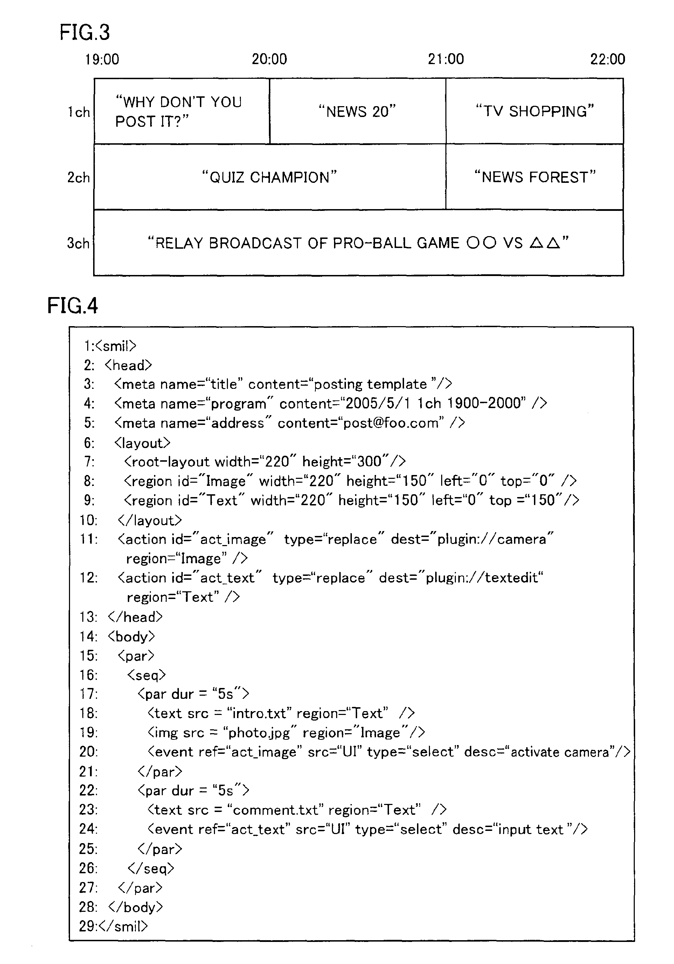

At step S204, electronic program guide display unit 109 displays the electronic program guide obtained by electronic program guide obtaining unit 103 and stored. As shown in Fig. 3, at step S204, programs to be broadcast on various channels are displayed, arranged time-sequentially in the similar manner as a common electronic program guide.

Further, template analyzing unit 106 analyzes the template obtained by template obtaining unit 104 and stored, and specifies the program to which the template is related, the template display name and the content of operation held by the template (step S205). Details of the process at step S205 will be described later.

Template selecting unit 110 selects, for each program displayed on electronic program guide display unit 109, a template related to each program, based on the result of analysis at step S205. Further, display selecting unit 107 obtains a piece of icon information from icon information storage unit 117, based on the result of analysis at step S205. Template presence display unit 108 displays the obtained piece of icon information and the template display name, in association with each program in the electronic program guide (step S206).

When the icon or display name displayed in electronic program guide at step S206 is selected by the user through template selecting unit 110 (YES at step S207), the process proceeds to step S208. Otherwise (NO at step S207), the process returns to step S201.

At step S208, template reproducing unit 111 reproduces the template selected at step S207. Further, message forming unit 112 forms a message from the information included in the reproduced template and the user input. Details of the process at step S208 will be described later.

Then, the message formed at step S208 is transmitted by communication unit 113 to the server 116 designated by the template or designated by the user, through the Internet (step S209).

### [First Embodiment]

The template consists of a script file describing information and terminal operation, and one or a plurality of media data. Fig. 4 shows a specific example of script description in accordance with the first embodiment.

Referring to Fig. 4, on lines 11 and 12 at the header portion (lines 2 to 13) of the script, action content is defined. Specifically, as the action content, individual identification information (action id) of each action, the type of execution of the action (type), action content (dest) and action execution region (region) are defined. More specifically, on line 11, the content of the action represented as identification information act_image is defined to be replacement of the information displayed on Image region with the image picked-up by a camera designated by plugin://camera. Similarly, on line 12, the content of action represented as identification information act_text is defined to be replacement of the information displayed on the Text region with a character sequence input by a text editor designated by plugin://textedit. The Image and Text regions are defined by lines 6 to 10. More specifically, the Image region defined by line 8 is a rectangle having the width of 220 pixels and the height of 150 pixels with coordinates (0, 0) being the upper left corner, and the Text region defined by line 9 is a rectangle having the width of 220 pixels and the height of 150 pixels coordinates with (0, 150) being the upper left corner.

In the paragraph of lines 15 to 27 of the body portion (lines 14 to 28) of the script, media data and actions that are executed in parallel are described. Lines 16 and 26 describe that these media data and actions are executed time-sequentially. In paragraphs of lines 17 to 21 and lines 22 to 25, media data and actions to be executed during 0 to 5 seconds and 5 to 10 seconds are described, respectively. More specifically, lines 18 and 19 describe that text data and image data are to be reproduced from 0 to 5 seconds, and line 20 describes that a UI (User Interface) for "activating camera" is displayed and when an operation from the user is received, an action represented by act_image is executed.

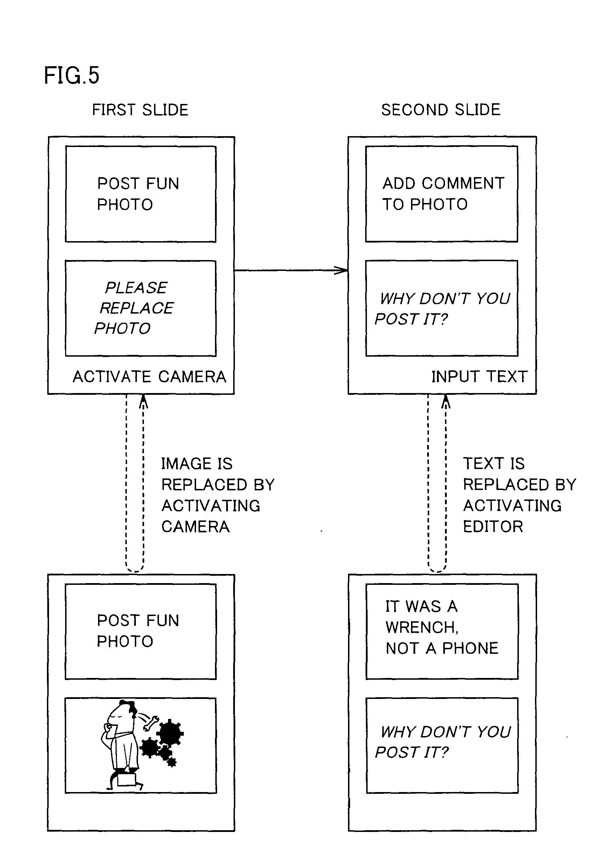

Template reproducing unit 111 reproduces the template by executing actions in accordance with the description above. Fig. 5 illustrates the images displayed when template reproducing unit 111 reproduces the template. The template reproduced here is assumed to be the template including the script file shown in Fig. 4, for posting a picked-up photograph with a comment to a program asking posting from viewers.

Referring to Fig. 5, on the first slide displayed from 0 to 5 seconds, a character string "Post Fun Photo" is displayed on the text region on the upper half, while an image with "Replace the photo" drawn, is displayed on the image region on the lower half. Further, at the lowermost portion of the image, there is an indication of "activate camera", indicating that a camera is available with this slide. When the user performs a predetermined operation such as pressing of a prescribed key, the camera is activated, and the image that has been displayed on the image region on the lower half is replaced by the picked-up image.

On the second slide displayed from 5 to 10 seconds, a character string "Add comment to the photo" is displayed on the text region on the upper half, while an image with "Why don't you post it?" drawn, is displayed on the image region on the lower half. Further, at the lowermost portion of the image, there is an indication of "input text", indicating that a text editor is available with this slide. When the user performs a predetermined operation such as pressing of a prescribed key, the text editor is activated, and the character string that has been displayed on the text region on the upper half is replaced by the input character string.

In this manner, media data is reproduced time-sequentially, and at the same time, possible operations are displayed time-sequentially. Accordingly, it is possible for the user to execute a process of, for example, replacing media data, by performing operations at prescribed timings. Specifically, as the template is analyzed by template analyzing unit 106, the media data replacing function is specified as the function utilized at message forming unit 112.

Message forming unit 112 forms a new message with the media data replaced in accordance with the result of analysis. The formed message is transmitted to a prescribed server or a terminal by communication unit 113 through the Internet. More specifically, the message is transmitted to the mail address defined on line 5. Though SMPT (Simple Mail Transfer Protocol) is used for transmitting the message as a mail here, URL (Uniform Resource Locators) may be defined on line 5 and the message may be transmitted in accordance with HTTP (Hyper Text Transfer Protocol).

When the script shown in Fig. 4 is analyzed by template analyzing unit 106, it is detected from action contents defined by lines 11 and 12 of the script that text input and camera activation are necessary functions to be used by message forming unit 112 in order to form the message. Further, from the date, channel information and broadcast time defined by line 4 of the script, the program to which the template is related is specified. Further, from the description on line 3 of the script, the display name of the template is specified. In the present embodiment, it is assumed that information specifying a program is included in the template, to relate the template with the program. Alternatively, the template may only include an identifier, and the identifier of the template referred to by each program may be included in the electronic program information data, so that the template and the program can be related to each other. Specific example in that case will be described later.

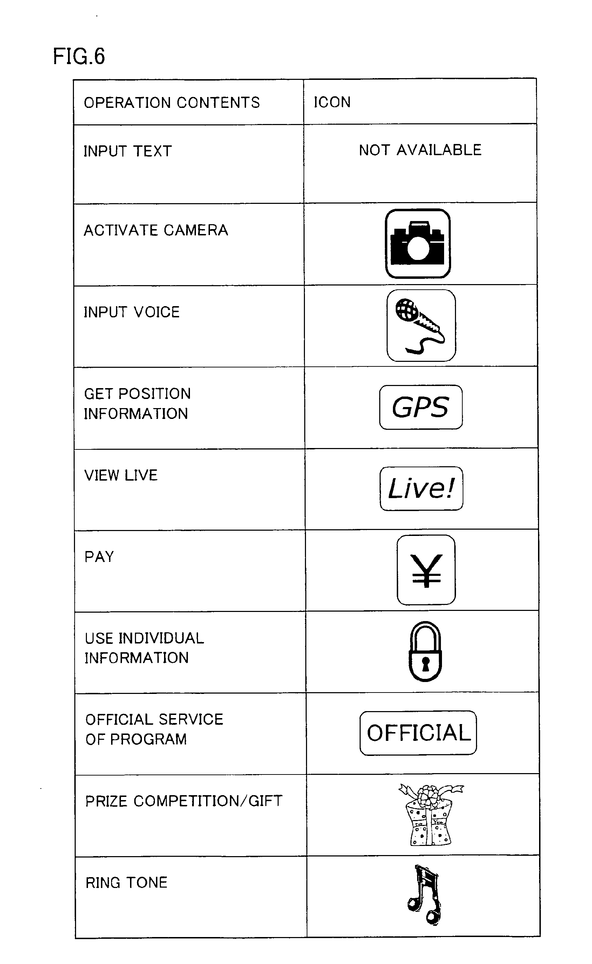

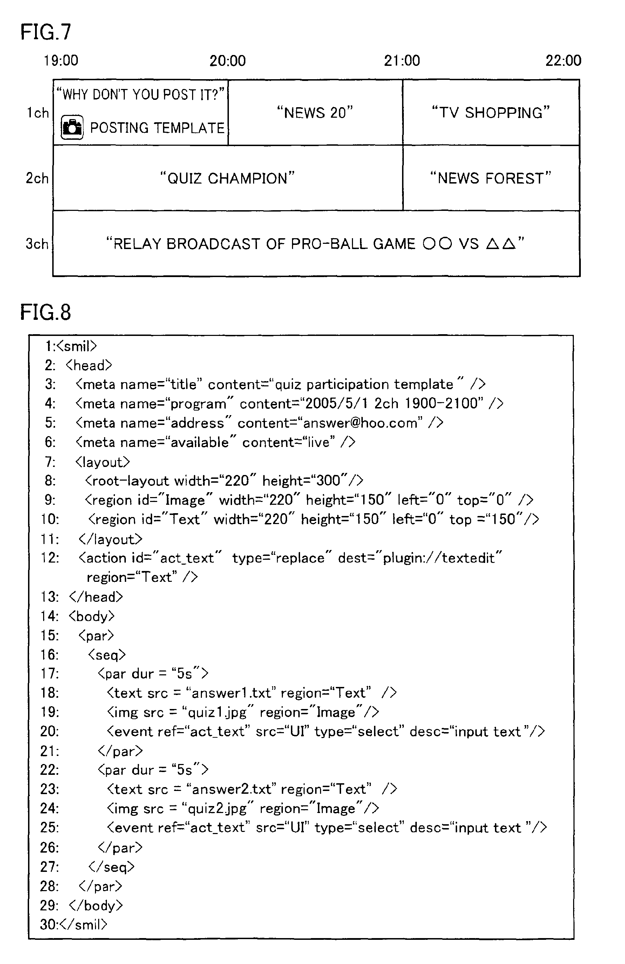

Fig. 6 shows specific examples of pieces of icon information stored in icon information storage unit 117. Referring to Fig. 6, icon information storage unit 117 stores operation content of the template and a piece of icon information suggesting its characteristic to the user. Template presence display unit 108 adds, to the display column of each program, the template display name specified by template analyzing unit 106 and the icon information. In the specific example of electronic program guide shown in Fig. 7, in addition to the display at step S204 shown in Fig .3, a camera icon meaning activation of a camera and a template name "posting template" are added to the program name of "Why don't you post it?"

### [Second Embodiment]

Fig. 8 shows a specific example of script description in accordance with the second embodiment. The template in accordance with the second embodiment is assumed to be a template for answering a quiz posed during broadcast of a quiz show and to actually participate in the quiz show.

Referring to Fig. 8, line 6 of the script describes a time zone in which the template is available. Specifically, it is described that the template can be used only during reproduction of the program, and the restriction on the time of use is analyzed by template analyzing unit 106.

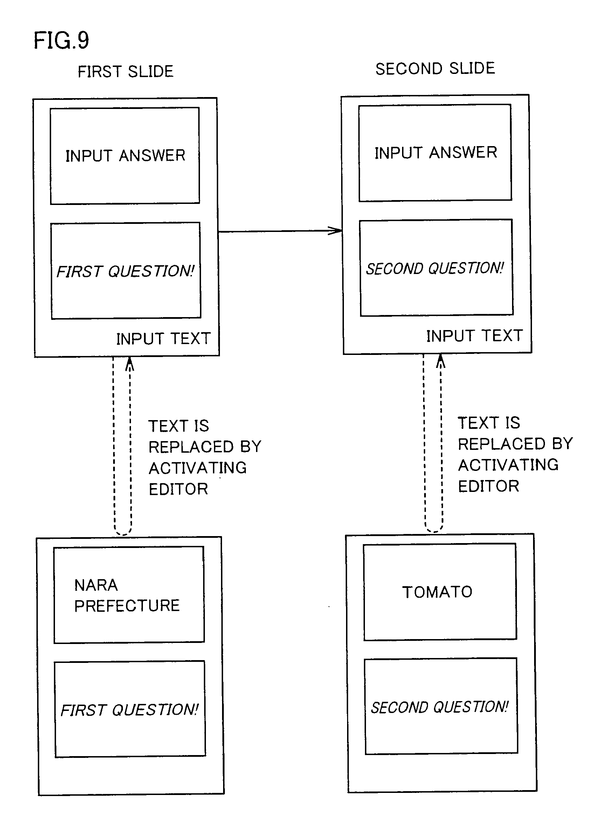

Fig. 9 illustrates images displayed when the template including the script shown in Fig. 8 is reproduced by template reproducing unit 111. Referring to Fig. 9, on the first slide displayed from 0 to 5 seconds, a character string "Input Answer" is displayed on the text region on the upper half, while an image with "First question" drawn, is displayed on the image region on the lower half. Further, at the lowermost portion of the image, there is an indication of "input text", indicating that a text editor is available with this slide. When the user performs a predetermined operation such as pressing of a prescribed key, the text editor is activated, and the character string that has been displayed on the text region on the upper half is replaced by the input character string. Similarly, on the second slide displayed from 5 to 10 seconds, a character string "Input Answer" is displayed on the text region on the upper half, while an image with "Second question" drawn, is displayed on the image region on the lower half, "input text" is displayed on the lowermost portion, and the character string that has been displayed on the text region on the upper half is replaced by the input character string.

When such a template is obtained by template obtaining unit 104, display selecting unit 107 obtains a piece of icon information corresponding to the content of operation from icon storage unit 117, and adds the piece of information to the display column of the program specified by template analyzing unit 106. Specifically, based on the limit of usable time analyzed by template analyzing unit 106, a piece of icon information notifying accordingly is obtained from icon information storage unit 117.

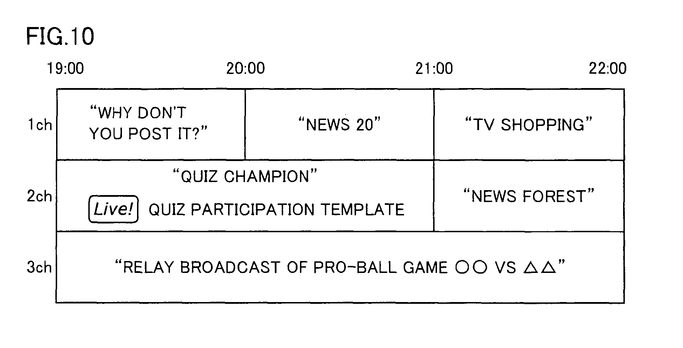

Fig. 10 shows a specific example of the electronic program guide displayed at step S206 in accordance with the second embodiment. Referring to Fig. 10, when the template including the script shown in Fig. 8 is analyzed by template analyzing unit 106, an icon indicating the limit of usable time usable only during reproduction of the program, and the template name "quiz participation template" are displayed below the program title "Quiz Champion". By selecting such a template, the user can activate the text editor to overwrite the characters displayed in the Text region by an answer to the quiz and can send the formed message to the program.

As the service available only during the broadcast of a program is displayed and known to the user before broadcast of the program, the user may be motivated to view the program.

In the second embodiment described above, the timing of displaying the template name or icon information may be only in the time zone in which the template is usable, rather than before the broadcast of the program.

### [Third Program]

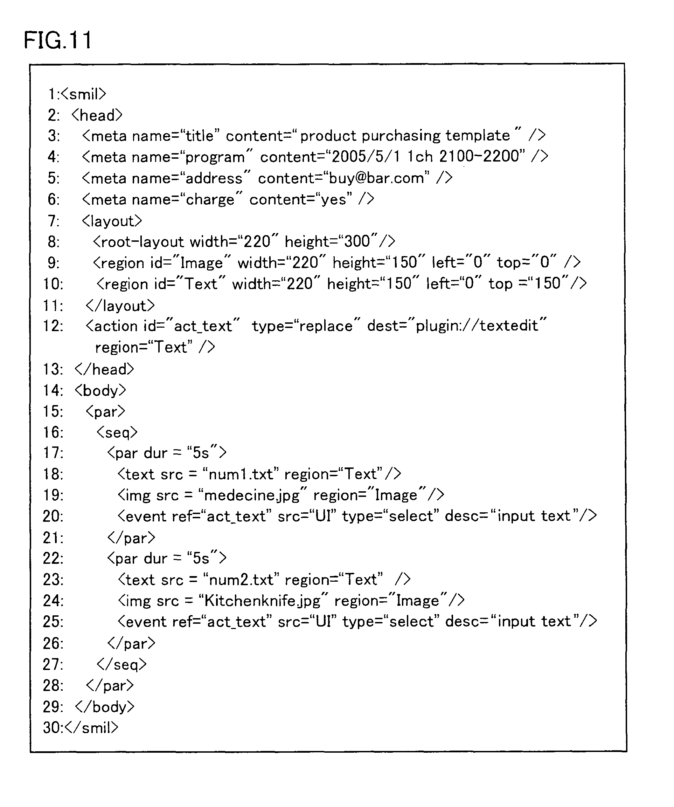

Fig.11 shows a specific example of the script description in accordance with the third embodiment. The template in accordance with the third embodiment is assumed to be a template for actually ordering a product on a TV shopping program introducing and promoting purchase of various products.

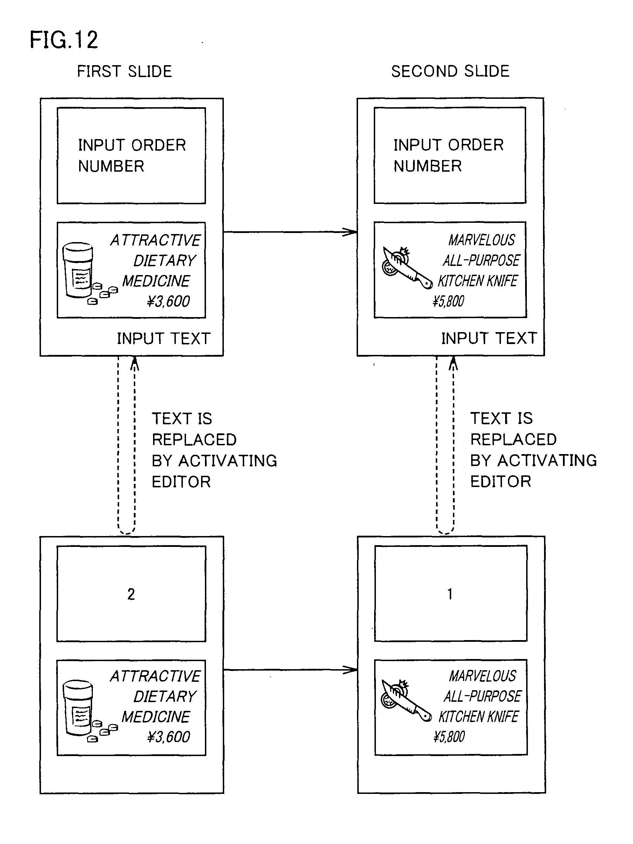

Fig. 12 illustrates images displayed when template reproducing unit 111 reproduces the template including the script shown in Fig. 11. Referring to Fig. 12, on the first slide displayed from 0 to 5 seconds, a character string "Input order number" is displayed on the text region on the upper half, while an image of the product of interest is displayed on the image region on the lower half. Further, at the lowermost portion of the image, there is an indication of "input text", indicating that a text editor is available with this slide. When the user performs a predetermined operation such as pressing of a prescribed key, the text editor is activated, and the character string that has been displayed on the text region on the upper half is replaced by the input character string. Similarly, on the second slide displayed from 5 to 10 seconds, a character string " Input order number " is displayed on the text region on the upper half, while an image of the product of interest is displayed on the image region on the lower half, "input text" is displayed on the lowermost portion, and the character string that has been displayed on the text region on the upper half is replaced by the input character string.

Further, line 6 of the script shown in Fig. 11 describes that use of the template will be charged.

When such a template is obtained by template obtaining unit 104, display selecting unit 107 obtains a piece of icon information corresponding to the content of operation from icon storage unit 117, and adds the piece of information to the display column of the program specified by template analyzing unit 106. Specifically, based on the charging information analyzed by template analyzing unit 106, a piece of icon information notifying accordingly is obtained from icon information storage unit 117.

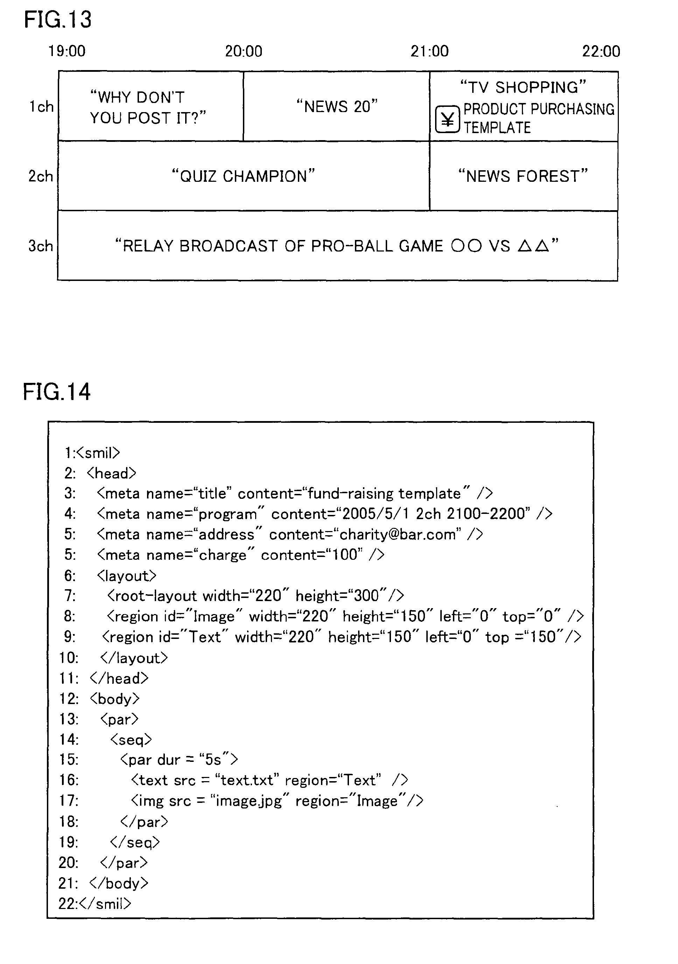

Fig. 13 shows a specific example of the electronic program guide displayed at step S206 in the third embodiment. Referring to Fig. 13, when the template including the script shown in Fig. 11 is processed, an icon representing the charging information that the template use is charged, and the template name "product purchasing template" are displayed below the program title "TV shopping". By selecting such a template, the user can activate the text editor to overwrite the characters displayed on the Text region by the order number of product displayed on the Image region with the understanding that he/she must pay for the use of the template, and can send the formed message to the program.

If it is analyzed by template analyzing unit 106 that the charge of the service using the template is fixed no matter what message is formed by the user, an icon indicating the fixed charge may be displayed at step S206.

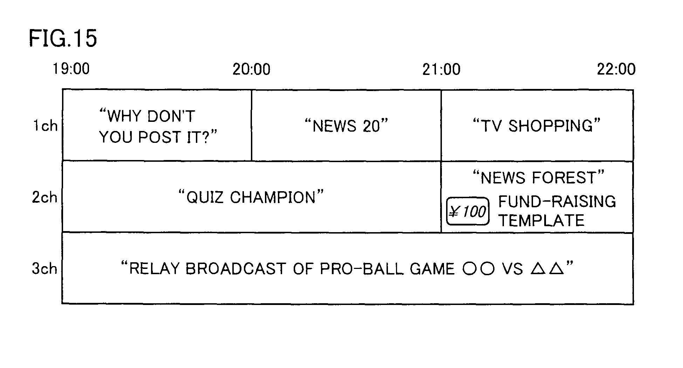

Fig. 14 shows a specific example of a script description included in the template for contributing ¥100 to a welfare organization introduced in a news program. Referring to Fig. 14, line 5 of the script defines that the charge for the template using service is ¥100. Fig. 15 shows a specific example of display of the electronic program guide. Referring to Fig. 15, when the template including the script shown in Fig. 14 is analyzed by template analyzing unit 106, an icon indicating that the charge for using the template is ¥100 and the template name "fund-raising template" are displayed below the program title "NEWS FOREST".

### [Fourth Embodiment]

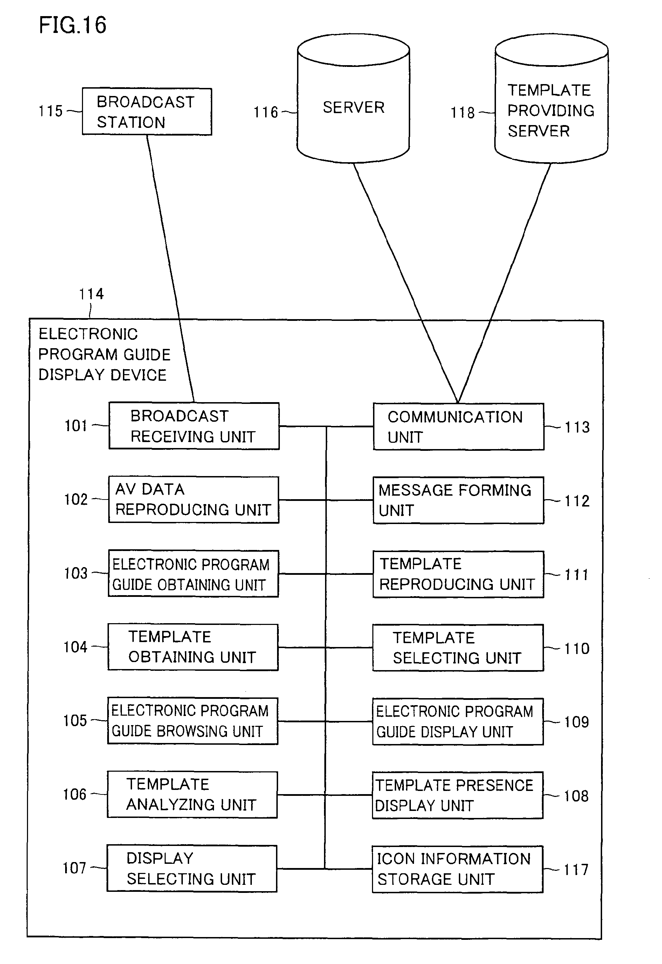

The functional configuration of electronic program guide display device 114 in accordance with the fourth embodiment is similar to that of Fig. 1. As shown in Fig. 16, in the fourth embodiment, a template providing server 118 is included in the electronic program guide display system, and communication unit 113 communicates with server 116 and template providing server 118 through the Internet, and obtains a template from template providing server 118. Specifically, in the present embodiment, electronic program guide obtaining unit 103 and template obtaining unit 104 obtain the electronic program guide and the template through different communication means, that is, through broadcast receiving unit 101 and communication unit 113. Template providing server 118 is not limited to a server and it may be a communication terminal such as a portable telephone.

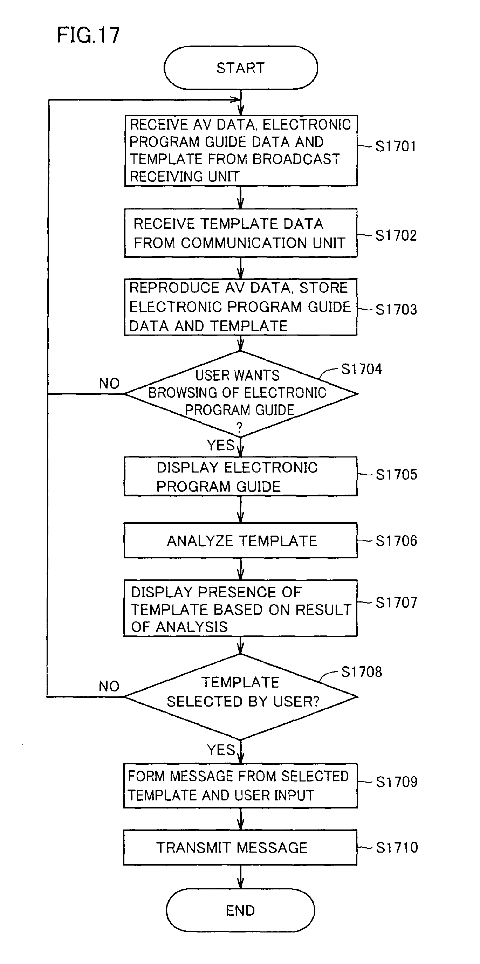

The process by electronic program guide display device 114 in accordance with the present embodiment shown in Fig. 17 is also realized by a CPU, not shown, of electronic program guide display device 114 such as a portable telephone, not shown, reading and executing a program stored in the storage and invoking various functions shown in Fig. 16.

As shown in Fig. 17, in electronic program guide display device 114 in accordance with the present embodiment, in addition to the process of steps S201 to S209 of Fig. 2 corresponding to the steps S 1701, S 1703 ~ S 1710, the process of obtaining the template from template providing server through communication unit 113 is executed at step S 1702.

As the electronic program guide display device 114 in accordance with the present embedment uses a template provided by template providing server 118, it becomes possible to display a template received, for example, by a mail, on the electronic program guide.

### [Fifth Embodiment]

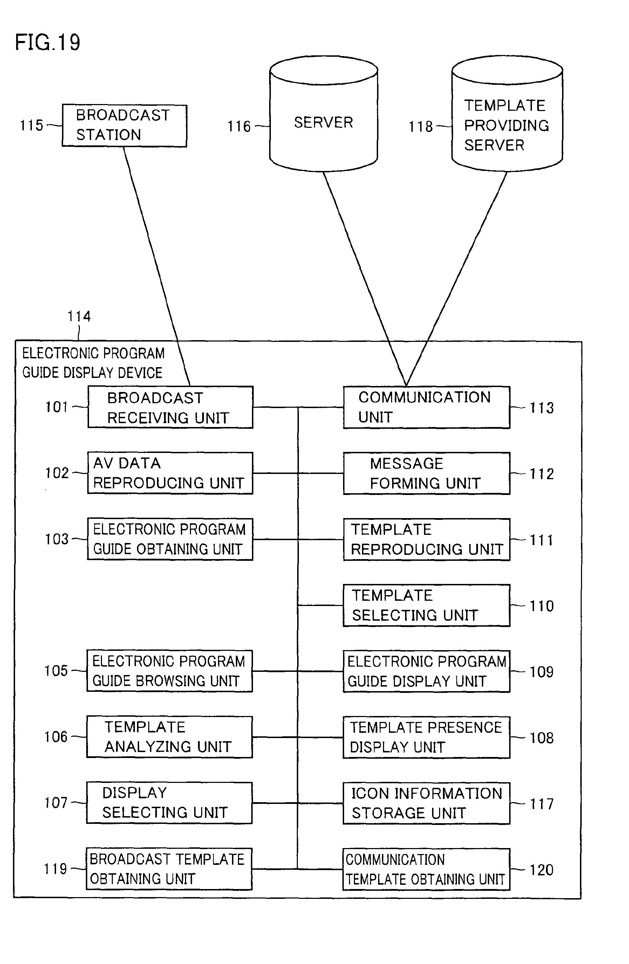

Referring to Fig. 19, the function of electronic program guide display device 114 in accordance with the fifth embodiment corresponds to the functional configuration of electronic program guide display device 114 in accordance with the fourth embodiment shown in Fig. 16, and includes a broadcast template obtaining unit 119 and a communication template obtaining unit 120, in place of template obtaining unit 104.

In the fourth embodiment, template obtaining unit 104 obtains the template through both broadcast receiving unit 101 and communication unit 113. In the present embodiment, broadcast template obtaining unit 119 obtains a template through broadcast receiving unit 101, and communication template obtaining unit 120 obtains the template through communication unit 113. Broadcast template obtaining unit 119 and communication template obtaining unit 120 each store the obtained template in a prescribed storage region such as a prescribed storage region of the storage, similar to the template obtaining unit 104 described above. At that time, it is preferred to add information indicating by which obtaining unit the template is obtained. Alternatively, the templates may be stored in different storage regions.

Template presence display unit 108 receives, as a result of analysis by template analyzing unit 106, the template display name as well as the information indicating by which obtaining unit the template has been obtained. Therefore, template analyzing unit 106 analyzing the stored template analyzes by which communication means the template has been obtained. As the template is obtained by the template obtaining unit corresponding to the communication means, it is possible for template presence display unit 108 receiving the result of template analysis from template analyzing unit 106 to recognize through which communication means the displayed template has been obtained.

In the specific example described above, communication means as the template transmitting paths are different. The template transmission path may be the same communication means such as broadcast wave or the Internet, and only the communication path or protocol used for communication may be different. In that cast, electronic program guide display device 114 in accordance with the present embodiment includes a template obtaining units corresponding to one same communication means and to respective transmission paths.

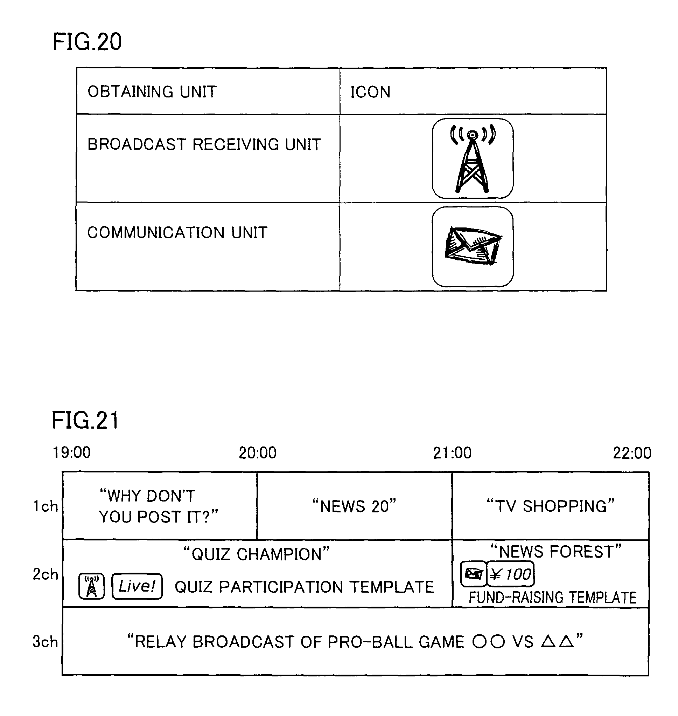

Icon information storage unit 117 holds, in addition to the piece of icon information corresponding to the operation content of the template such as shown in Fig. 6, pieces of icon information corresponding to the obtaining units, as shown in Fig. 20. Template selecting unit 110 receiving the result of analysis from template analyzing unit 106 selects a piece of icon information corresponding to the obtaining unit that obtained the template, and inputs the selected piece of information to template presence display unit 108. As a result, template presence display unit 108 displays different icons dependent on which communication means (or which transmission path) is used for obtaining the displayed template.

The specific example of electronic program guide shown in Fig. 21 is a specific example of the electronic program guide displayed by using the icon information shown in Fig. 20, which shows that "quiz participation template" is a template received by broadcast receiving unit 101 and obtained by broadcast template obtaining unit 119, and "fund-raising template" is received by communication unit 113 and obtained by communication template obtaining unit 120.

### [Sixth Embodiment]

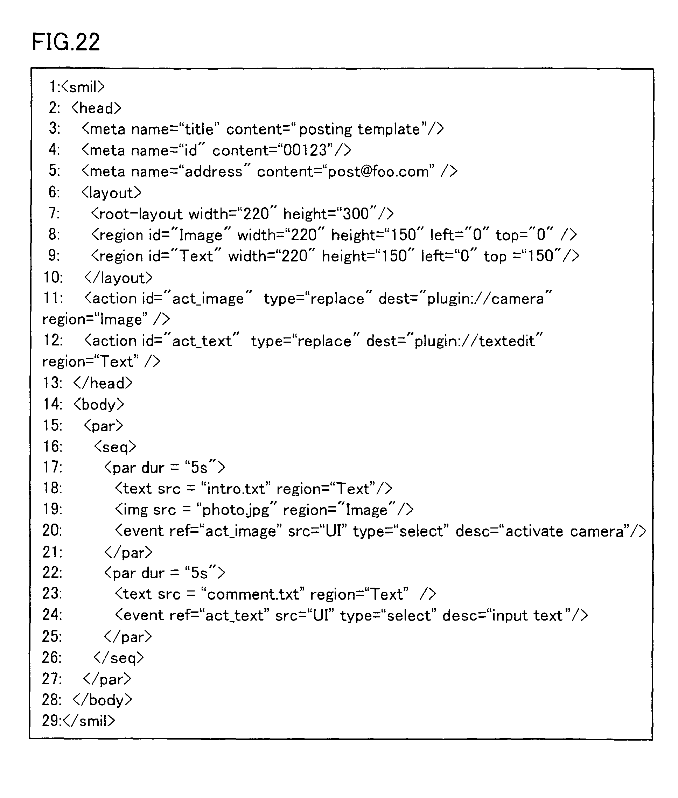

The description of the present embodiment includes, in place of the description for template analyzing unit 106 to specify the program to which each template is related as represented by line 4 of the script description in accordance with the first embodiment shown in Fig. 4, a program identifier such as shown on line 4 of Fig. 22. Therefore, in the first embodiment, when template analyzing unit 106 specifies a program related to each template, the information described in the template (line 4 of Fig. 4) is used, while in the sixth embodiment, only the identifier of the program to which each template refers to is included in the template, and the template and the program are related to each other by the comparison with the identifier of the program included in the electronic program guide data. Specifically, in the script shown in Fig. 22, only the program identifier "id" being "00123" is simply described on line 4.

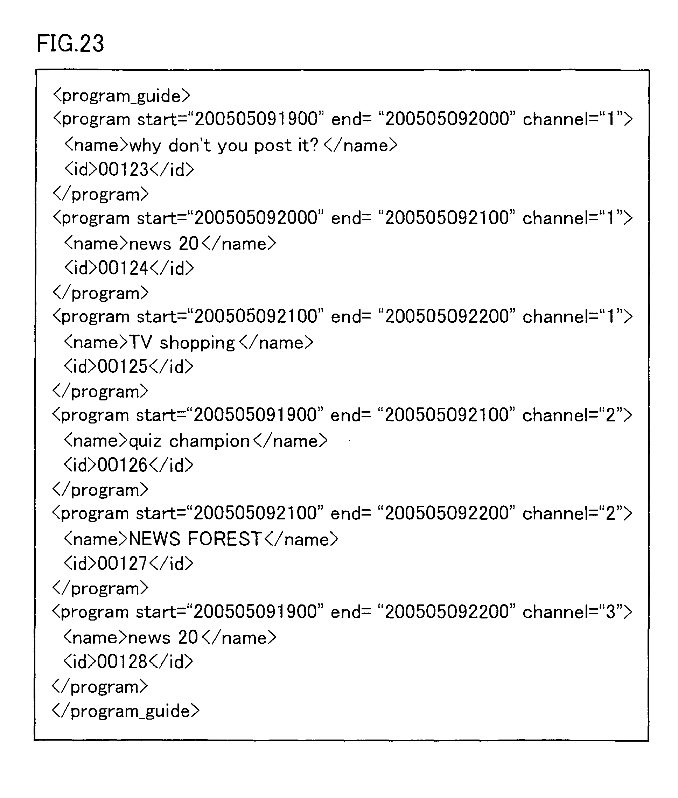

Fig. 23 shows a specific example of description of the electronic program guide data in accordance with the present embodiment, and the electronic program guide data is the original data of electronic program guide displayed as shown in Fig. 3.

Referring to Fig. 23, in the electronic program guide data in accordance with the present embodiment, information related to each program is described in XML, and each program is represented by <program> element. Further, <start> attribute, <end> attribute, <channel> attribute and <name> element represent start time, end time, channel and program title, respectively.

By way of example, lines 2 ~ 5 describe that a program "Why don't you post it?" is broadcast from 19:00, May 8, 2005 to 20:00, May 9, 2005, on channel 1. Further, the identifier of the program represented by <id> element is described to be "00123".

Template analyzing unit 106 analyzes the template including the script shown in Fig. 22, and refers to the electronic program guide data shown in Fig. 23, analyzes that the template is related to the program represented by the electronic program guide data as the identifiers are the same, and inputs the result to template presence display unit 108. In this manner, by comparing the identifier described in the template with the identifier described in the electronic program guide, it is possible to recognize which template is related to which program.

### [Seventh Embodiment]

In the seventh embodiment, electronic program guide display device 114 includes an application for reproducing a content in addition to template reproducing unit 111, and an application to be activated is selected from a plurality of candidates, in accordance with the description in the template. It is assumed that in the seventh embodiment, template reproducing unit 111 and a Web browser are included as applications.

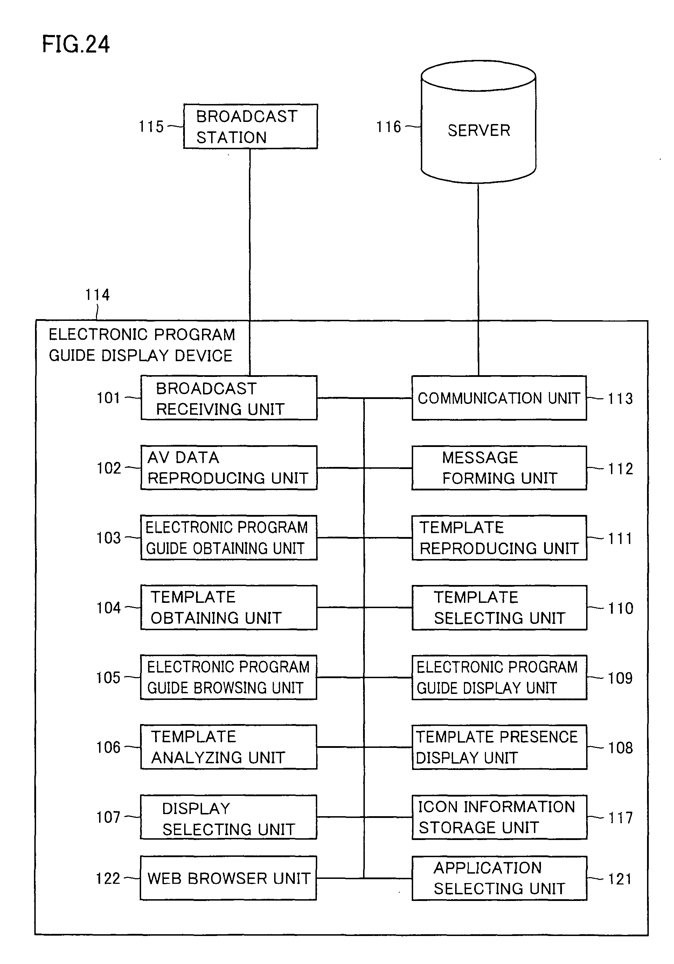

Referring to Fig. 24, the function of electronic program guide display device 114 in accordance with the seventh embodiment corresponds to the functional configuration of electronic program guide display device 114 in accordance with the first embodiment shown in Fig. 1, and additionally includes an application selecting unit 121 and a Web browser unit 122.

Application selecting unit 121 receives the result of analysis from template analyzing unit 106 and a template selection result from template selecting unit 110, selects an application to be activated based thereon, and inputs an instruction signal to the corresponding application. In accordance with the instruction signal, Web browser unit 122 obtains and displays the Web page accessed by the URL designated in the selected template, in the similar manner as a general Web browser.

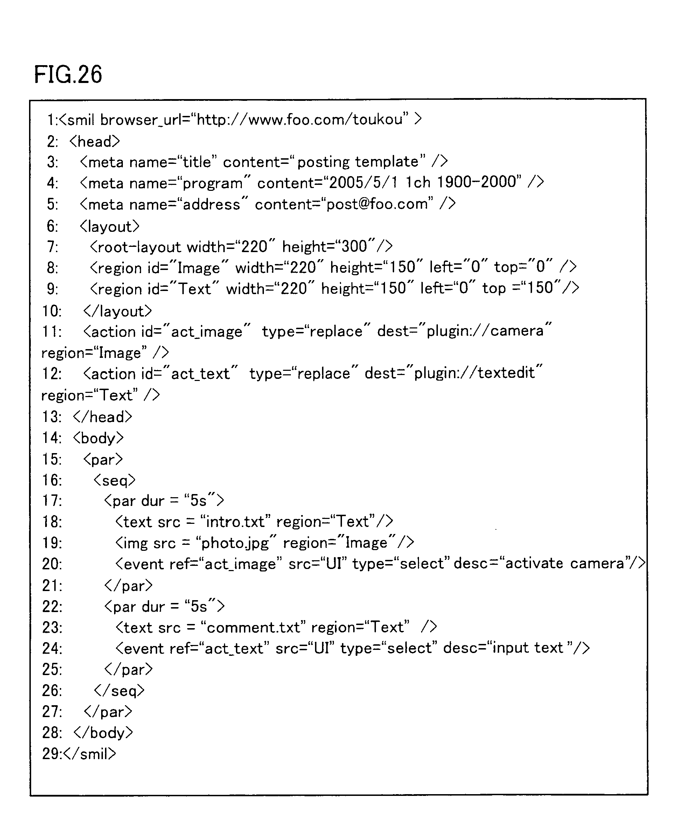

Referring to Fig. 26, the script description in accordance with the present embodiment includes, in place of <smil> element start description on line 1 of the script description in accordance with the first embodiment shown in Fig. 4, a URL to be passed to Web browser unit 122, in <browser_url>attribute of <smil> element.

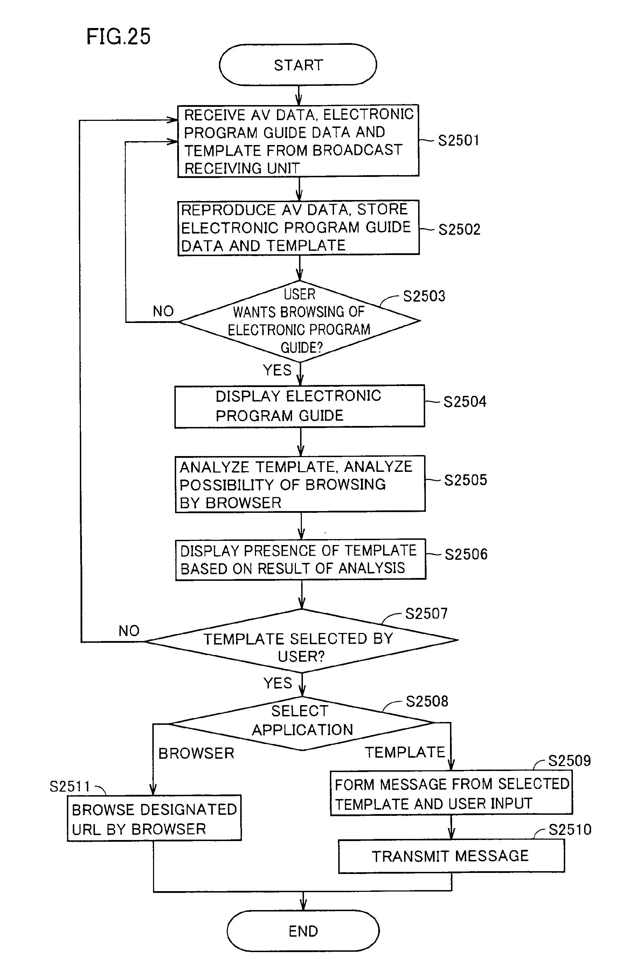

At steps S2501 ~ S2504 of the process in electronic program guide display device 114 in accordance with the present embodiment shown in Fig. 25, a process similar to that of steps S201 ~ S204 of Fig. 2 is executed.

At step S2505, the template is analyzed by template analyzing unit 106 similar to step S205, and in the present embodiment, whether the template is available from the Web browser or not is also analyzed. For instance, in the template including the script shown in Fig. 26, at step S2055, the <browser_url> attribute in <smil> element described on line 1 is analyzed by template analyzing unit 106, and it is found that the template is available from the Web browser, and that the URL designated when browsed by the Web browser is "http://www.foo.com/toukou". Further, if the <browser_url> attribute does not exist in the script, it is determined to be not available from the browser.

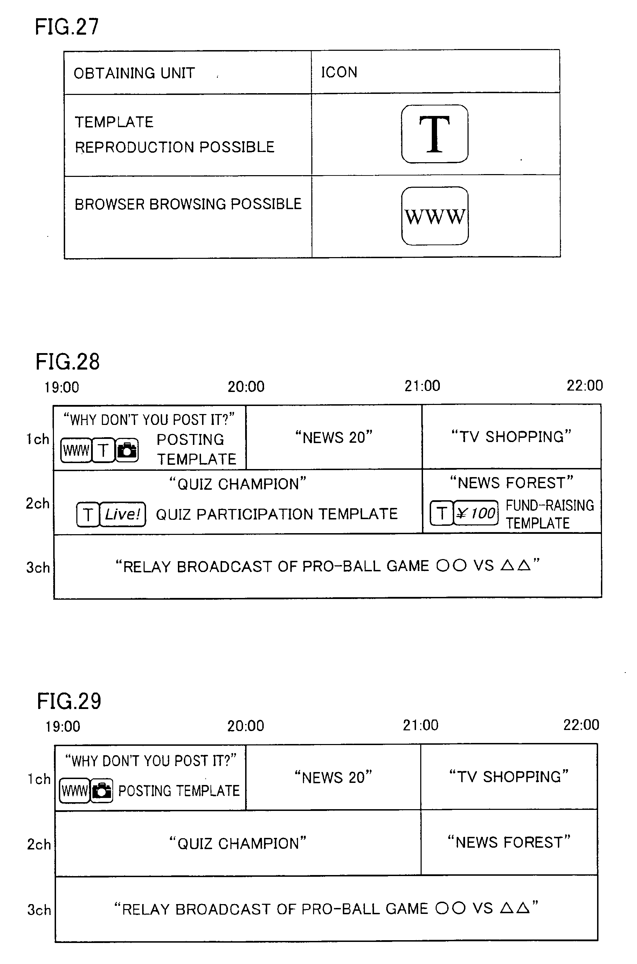

In the present embodiment, icon information storage unit 117 holds, in addition to the pieces of icon information shown in Fig. 6, a piece of icon information meaning that the template shown in Fig. 27 can be reproduced by template reproducing unit 111, and a piece of icon information meaning that browsing by the browser is possible. At step S2506, template presence display unit 108 displays an icon in accordance with the application used, based on the result of analysis by template analyzing unit 106 as to which template uses which application.

Fig. 28 shows a specific example of electronic program guide displayed at step S2506. In the display of Fig. 28, icons represent that "posting template", "quiz participation template" and "fund-raising template" can all be reproduced by template reproducing unit 111, and an icon represents that "posting template" also allows browsing by the Web browser.

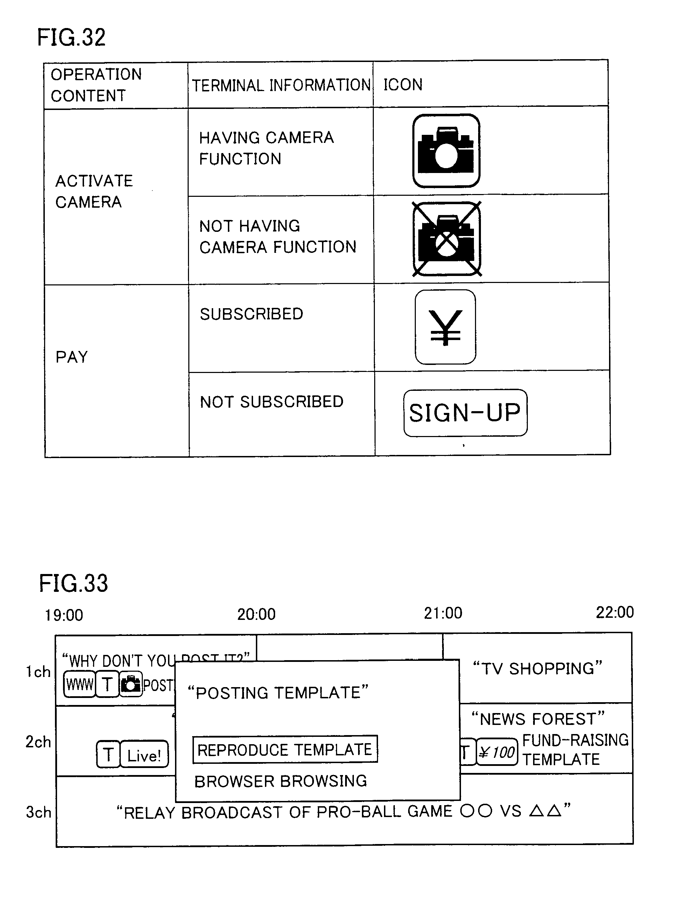

At step S2508, for the template selected at step S2507, an application to be activated is selected by application selecting unit 121. If the script does not include the <browser_url> attribute, the template is reproduced by template reproducing unit 111, as in the first embodiment. If the script includes the <browser_url> attribute, two applications, that is, template reproducing unit 111 and Web browser unit 122 are selectable. In that case, template presence display unit 108 displays an icon "T" indicating that template reproduction is possible and an icon "WWW" indicating that browsing by the browser is possible, allowing the user to select the application to be activated. Alternatively, after the user selects a template, a dialog for selection such as shown in Fig. 33 may be displayed, asking the user to select the application to be activated, or the application to be activated may be selected automatically in accordance with preset priority.

### [Eighth Embodiment]

An example will be described, in which the application to be used by the template is not supported by electronic program guide display device 114. For instance, assuming that template reproducing unit 111 is not included in electronic program guide display device 114 while Web browser unit 122 is included, template presence display unit 108 may display only the icon representing templates allowing browsing by the Web browser on the electronic program guide, based on the result of analysis by template analyzing unit 106.

By way of example, assume that the electronic program guide data corresponding to the electronic program guide shown in Fig. 28 is displayed by electronic program guide display device 114 not including data reproducing unit 111. Here, template presence display unit 108 does not display the icon "T" indicating possibility of template reproduction, and displays only the "posting template" that can be browsed by the browser.

### [Ninth Embodiment]

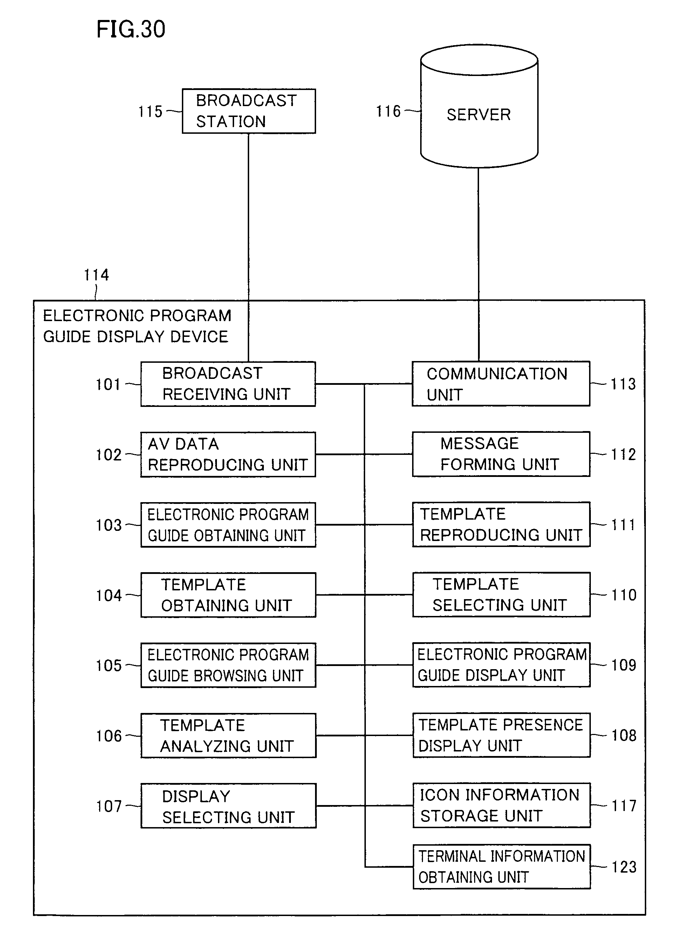

Referring to Fig. 30, the function of electronic program guide display device 114 in accordance with the ninth embodiment corresponds to the functional configuration of electronic program guide display device 114 in accordance with the first embodiment shown in Fig. 1 and additionally includes a terminal information obtaining unit 123.

Terminal information obtaining unit 123 accesses to an attribute storage unit, not shown, of electronic program guide display device 114, obtains information about terminal functions such as presence/absence of camera function and the like, presence/absence of pay-template usage subscription and the like (hereinafter referred to as terminal information), and passes the information to display selecting unit 107.

In electronic program guide display device 114 in accordance with the present embodiment, display selecting unit 107 determines icons based not only on the result of analysis of templates by template analyzing unit 106 but also on the terminal information from terminal information obtaining unit 123.

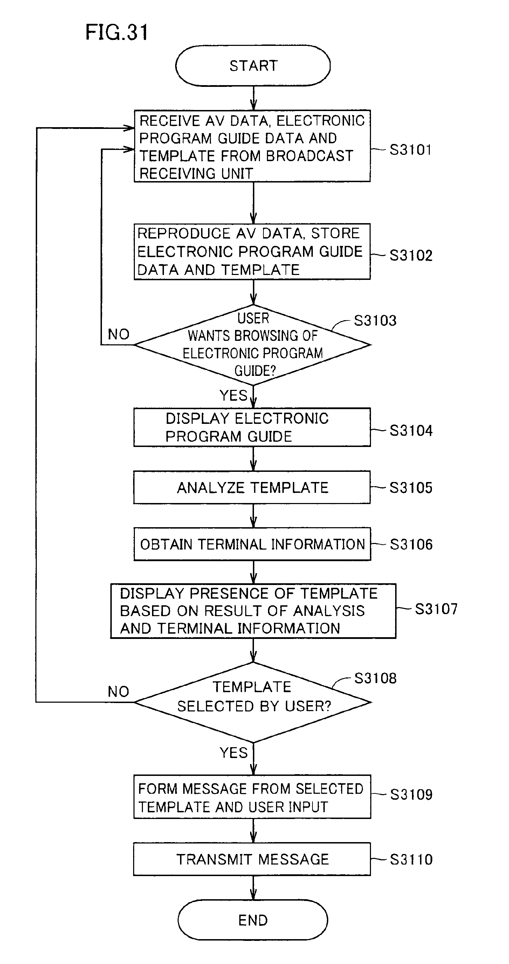

At steps S3101 ~ S3105 of the process in electronic program guide display device 114 in accordance with the present embodiment shown in Fig. 31, a process similar to that of steps S201 to S205 of Fig. 2 is executed.

At step S3106, terminal information is obtained at terminal information obtaining unit 123. At step S3107, template selecting unit 110 selects, for each program displayed at electronic program guide display unit 109, a template related to each program based on the result of analysis at step S3105. Further, display selecting unit 107 obtains a piece of icon information from icon information storage unit 117, based on the result of analysis at step S3105 and on the terminal information obtained at step S3106.

Referring to Fig. 32, icon information storage unit 117 in accordance with the present embodiment stores icons in relation to the result of template analysis and terminal information. In the specific example shown in Fig. 32, for a template analyzed by template analyzing unit 106 that it activates a camera, a camera icon is selected if the electronic program guide display device 114 has the camera function, and a camera icon with "x" added is selected if it does not have the camera function, by display selecting unit 107 based on the terminal information. By the display of such icon, it can be seen that the template activates camera and that a camera is not available in electronic program guide display device 114.

Similarly, in the specific example shown in Fig. 32, if a pay template is to be used and the user has not yet entered an agreement of using the pay template, an icon urging sign-up of the agreement is displayed.

If the electronic program guide display device 114 does not have the camera function, only the templates not activating the camera may be displayed on the electronic program guide.

When individual information stored in the terminal is used when a message is formed by using a template, it is preferred to display a so notifying icon.

Further, if a template has a plurality of operation contents, a plurality of icons may be displayed for one template.

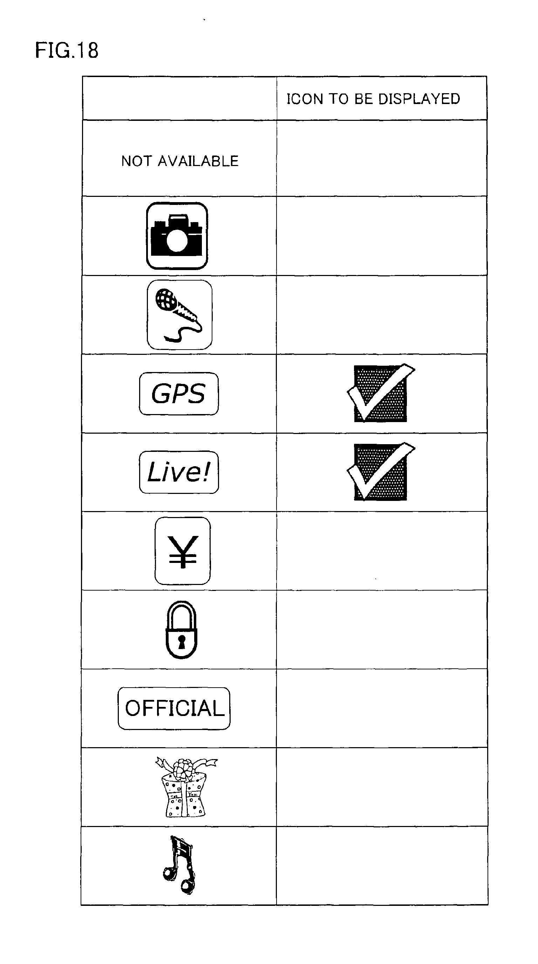

By selecting a template having a specific operation content by the selection image shown in Fig. 18, the display name and the icon may be displayed only for the predetermined template or the template having the specific operation content selected by the user. In the specific example of the selection image shown in Fig. 18, two types of templates, that is, a template utilizing GPS (Global Positioning System) function and a template available only during a program broadcast are selected by the user. Therefore, only these two templates are displayed on the electronic program guide.

The electronic program guide to be displayed is not limited to one yet-to-be-broadcast (for the future), and the guide may be one for the past broadcast or one that is currently broadcast (for the past).

Further, by assigning priority information to the templates, the template to be displayed may be determined in accordance with the priority value, if there are a plurality of templates for one program.

Further, electronic program guide display device 114 may display an icon indicating that the service made available by transmitting a message is an official service of the program, in the electronic program guide.

Similarly, in the electronic program guide, an icon indicating that the service made available by transmitting a message is an application for a gift or prize competition may be displayed.

Similarly, in the electronic program guide, an icon indicating that the service made available by transmitting a message is provision of a melody signaling an incoming call (ring tone) may be displayed.

Further, in the electronic program guide, display of a template that cannot be used by electronic program guide display device 114 may be turned off. By way of example, for an electronic program guide display device 114 not having the camera function, a template using the camera function may not be displayed on the electronic program guide.

In the embodiments described above, an electronic program guide display device using a template as an example of sub-content has been described. The specific example of sub-content, however, is not limited to the template and any other application may be adopted. For instance, an application for a portable telephone, which can be downloaded through a network, may be another specific example. Assume that an application for a portable telephone, having a function of activating a camera, is distributed in relation to a program. In that case, the portable telephone as the electronic program guide display device receiving the application may display an icon indicating that the application distributed in relation to the program has a function of activating a camera, in relation to the display of the program on the electronic program guide.

Further, the method of displaying an electronic program guide executed by the electronic program guide display device described above may be provided as a program. Such a program may be provided as a program product recorded on a computer-readable recording medium such as a flexible disk, CD-ROM (Compact Disk-Read Only Memory), ROM (Read Only Memory), RAM (Random Access Memory) and a memory card accompanying a computer. Alternatively, the program may be provided recorded on a recording medium such as a hard disk provided in the computer. The program may also be provided by downloading through a network.

The provided program product is installed to a program storage such as a hard disk, and executed. The program product includes the program itself and the recording medium on which the program is recorded.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

## Claims

1. An electronic program guide display device, comprising:
an electronic program guide obtaining unit (103) obtaining an electronic program guide for displaying information related to a program;
a sub-content obtaining unit (104) obtaining a sub-content including a piece of information specifying a program and a piece of information defining a terminal operation;
an electronic program guide display unit (109) displaying said electronic program guide; and
a sub-content presence display unit (108) indicating, when a sub-content related to said program presented on said electronic program guide exists among sub-contents obtained by said sub-content obtaining unit, presence of said sub-content with the piece of information related to said program.

2. The electronic program guide display device according to claim 1, further comprising:
a sub-content analyzing unit (106) analyzing the content of sub-content obtained by said sub-content obtaining unit; and
a display selecting unit (107) selecting a display for indicating presence of said sub-content at said sub-content presence display unit, in accordance with operation content of said terminal obtained by said sub-content analyzing unit.

3. The electronic program guide display device according to claim 2, further comprising:
a sub-content reproducing unit (111) reproducing said sub-content;
a message forming unit (112) forming a message from information included in said sub-content and a user input; and
a transmitting unit (113) transmitting the message formed by said message forming unit.

4. The electronic program guide display device according to claim 3, wherein said sub-content analyzing unit specifies a function used by said message forming unit.

5. The electronic program guide display device according to claim 3, wherein said sub-content analyzing unit specifies whether use of said sub-contents is charged or not.

6. The electronic program guide display device according to claim 3, wherein said sub-content analyzing unit specifies charge of use of said sub-content.

7. The electronic program guide display device according to claim 3, wherein said sub-content analyzing unit specifies a time period in which use of said sub-content is possible.

8. The electronic program guide display device according to claim 7, wherein said time period in which use of said sub-content is possible is during broadcast of said program to which said sub-content is related.

9. The electronic program guide display device according to claim 2, wherein said electronic program guide obtaining unit and said sub-content obtaining unit obtain said electronic program guide and said sub-content through one same communication unit respectively.

10. The electronic program guide display device according to claim 2, wherein
said electronic program guide obtaining unit and said sub-content obtaining unit obtain said electronic program guide and said sub-content through communication units different from each other respectively.

11. The electronic program guide display device according to claim 2, wherein said sub-content obtaining unit includes a first obtaining unit (119) and a second obtaining unit (120); and
said display selecting unit further selects a first display when said sub-content is obtained by said first obtaining unit, and selects a second display when it is obtained by said second obtaining unit.

12. The electronic program guide display device according to claim 2, further comprising:
a plurality of sub-content reproducing units (111, 122) reproducing sub-contents; and
a sub-content reproducing unit selecting unit (121) selecting a sub-content reproducing unit for reproducing said sub-content from said plurality of sub-content reproducing units.

13. The electronic program guide display unit according to claim 12, wherein said sub-content analyzing unit analyzes content of said sub-content and specifies said first sub-content reproducing unit and said second sub-content reproducing unit as the sub-content reproducing unit for reproducing said sub-content; and
said sub-content reproducing unit selecting unit selects the sub-content reproducing unit for reproducing said sub-content from said first sub-content reproducing unit and said second sub-content reproducing unit.

14. The electronic program guide display unit according to claim 13 wherein said display selecting unit selects said display in accordance with the sub-content reproducing unit for reproducing said sub-content specified by said sub-content analyzing unit.

15. The electronic program guide display unit according to claim 2, further comprising
a terminal information obtaining unit (123) obtaining terminal information as information about a function of said program guide display device; wherein
said display selecting unit selects said display in accordance with operation content of said terminal obtained by said sub-content analyzing unit and said terminal information obtained by said terminal information obtaining unit.
